# EUROPEAN PATENT APPLICATION

(11) **EP 4 790 733 A1**
(43) Date of publication of application: **12.08.2026**
(21) Application number: 24930760.4
(22) Date of filing: 16.10.2024
(51) Int. Cl.: H01F 27/08, H01F 17/06, H01F 27/24, H02M 7/48

(54) **COMMON-MODE FILTER CIRCUIT**

(30) Priority: 19.03.2024 JP 2024043786
(71) Applicant: IHI Corporation, Koto-ku Tokyo 135-8710 (JP)
(72) Inventor: HANEDA Ryo, Tokyo 135-8710 (JP)
(74) Representative: TBK
(86) International application number: PCT/JP2024/036856
(87) International publication number: WO 2025/197161

(57) **Abstract**

A common mode filter circuit includes: an annular common mode transformer core through which a secondary winding is inserted inside; a primary winding wound around the common mode transformer core so as to pass through an inside and an outside of the common mode transformer core; and a heat sink through which the secondary winding is inserted inside, the heat sink being joined to the common mode transformer core by abutting end portions thereof against each other, and performing heat exchange with the common mode transformer core. A cutout portion allowing the primary winding to pass between the inside and the outside of the common mode transformer core is formed in the heat sink or the common mode transformer core.

## Description

### Technical Field

The present disclosure relates to a common mode filter circuit.

### Background Art

Conventionally, a common mode filter circuit is known that includes an annular common mode transformer core through which a secondary winding is inserted inside, and a primary winding wound around the common mode transformer core so as to pass through an inside and an outside of the common mode transformer core (see Patent Literature 1 below).

### Citation List

### Patent Literature

Patent Literature 1: International Publication No. 2022-118847

### Summary of Invention

### Technical Problem

In this type of common mode filter circuit, the temperature of the common mode transformer core rises due to iron loss. If the common mode transformer core becomes too high in temperature, continuation of operation may become impossible. Therefore, the present disclosure describes a common mode filter circuit capable of appropriately cooling a common mode transformer core.

### Solution to Problem

A common mode filter circuit according to one aspect of the present disclosure is [1] "A common mode filter circuit comprising: an annular common mode transformer core through which a secondary winding is inserted inside; a primary winding wound around the common mode transformer core so as to pass through an inside and an outside of the common mode transformer core; and a cooler through which the secondary winding is inserted inside, the cooler being joined to the common mode transformer core by abutting end portions thereof against each other in an extending direction of the secondary winding, and performing heat exchange with the common mode transformer core, wherein a passage path allowing the primary winding to pass between the inside and the outside of the common mode transformer core is formed in the cooler or the common mode transformer core."

### Effects of Invention

According to the common mode filter circuit of the present disclosure, the common mode transformer core can be appropriately cooled.

### Brief Description of Drawings

FIG. 1 is a diagram showing a common mode filter circuit of the present embodiment.
FIG. 2(a) is a diagram showing a physical structure of a passive common noise canceller, and FIG. 2(b) is a cross-sectional view showing a state of viewing it from below in FIG. 2(a).
FIG. 3 is an exploded perspective view showing a common mode transformer included in the passive common noise canceller in a partially exploded manner.
FIG. 4(a) is a left side view of a comb-shaped heat sink, FIG. 4(b) is a front view thereof, and FIG. 4(c) is a right side view thereof.
FIG. 5 is an exploded perspective view showing a common mode transformer according to a modification in a partially exploded manner.
FIG. 6 is an exploded perspective view showing a common mode transformer according to another modification in a partially exploded manner.
FIGS. 7(a) and 7(b) are diagrams respectively showing passive common noise cancellers according to modifications.
FIGS. 8(a) and 8(b) are diagrams respectively showing passive common noise cancellers according to other modifications. **Description of Embodiments**

The gist of the present disclosure lies in the following [1] to [6].
[1] A common mode filter circuit including: an annular common mode transformer core through which a secondary winding is inserted inside; a primary winding wound around the common mode transformer core so as to pass through an inside and an outside of the common mode transformer core; and a cooler through which the secondary winding is inserted inside, the cooler being joined to the common mode transformer core by abutting end portions thereof against each other in an extending direction of the secondary winding, and performing heat exchange with the common mode transformer core, wherein a passage path allowing the primary winding to pass between the inside and the outside of the common mode transformer core is formed in the cooler or the common mode transformer core.
[2] The common mode filter circuit according to [1], wherein the passage path is formed in the cooler.
[3] The common mode filter circuit according to [1], wherein the passage path is a cutout portion formed at an end portion of the cooler or the common mode transformer core.
[4] The common mode filter circuit according to any one of [1] to [3], wherein a plurality of the common mode transformer cores and a plurality of the coolers are alternately arranged in the extending direction of the secondary winding with end portions thereof abutting against each other.
[5] The common mode filter circuit according to any one of [1] to [4], wherein a plurality of the common mode transformer cores and a plurality of the coolers are arranged in the extending direction of the secondary winding, and the plurality of the coolers includes one having a cooling capacity different from others.
[6] The common mode filter circuit according to any one of [1] to [5], wherein the plurality of the coolers includes a first cooler located at a position closer to a center, and a second cooler located at a position farther from the center than the first cooler and having a lower cooling capacity than the first cooler.
[7] The common mode filter circuit according to any one of [1] to [5], wherein among the plurality of the coolers, one located closer to a center has a higher cooling capacity.

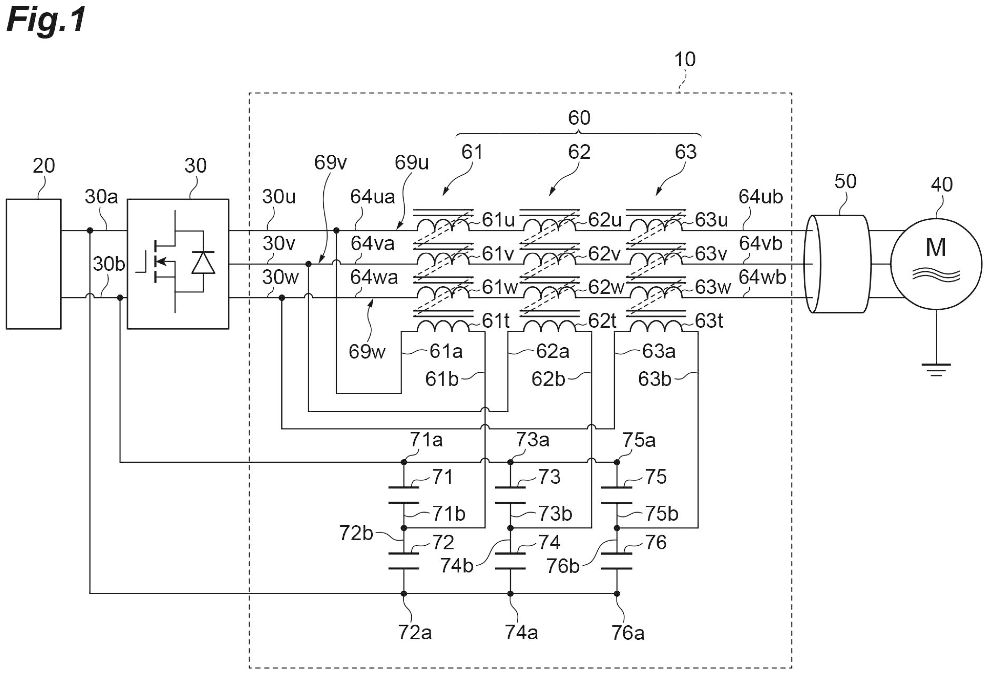

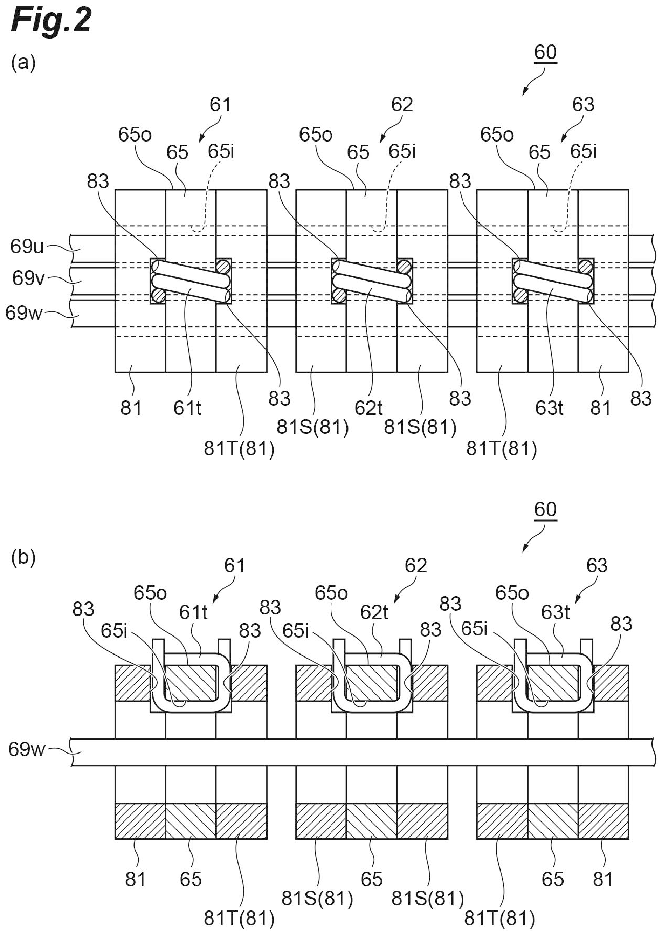

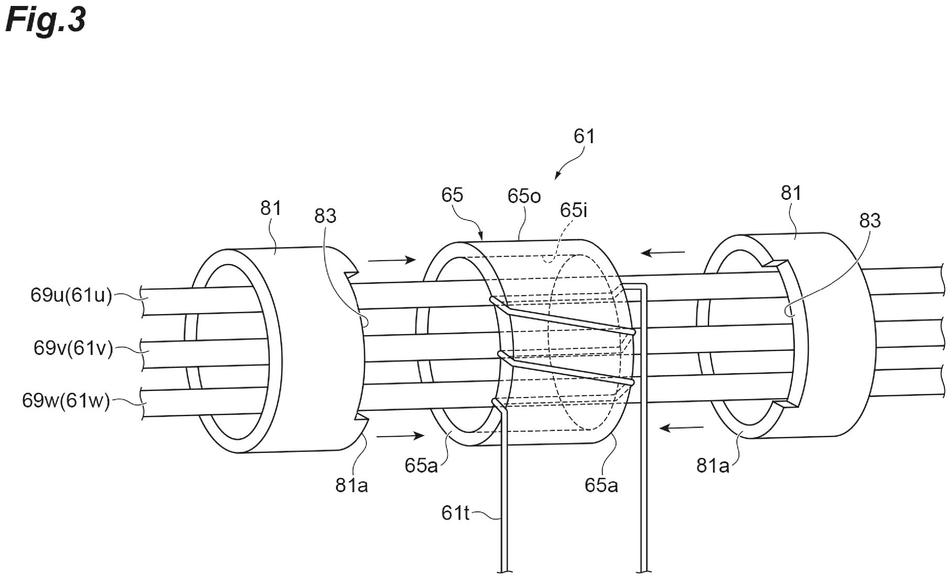

Hereinafter, embodiments will be described with reference to the drawings. FIG. 1 is a diagram showing a common mode filter circuit 10 of the present embodiment. FIG. 2(a) is a diagram showing a physical structure of a passive common noise canceller 60 included in the common mode filter circuit 10 of the present embodiment. FIG. 2(b) is a cross-sectional view showing a state of viewing the passive common noise canceller 60 from below in FIG. 2(a). FIG. 3 is an exploded perspective view showing a common mode transformer 61 included in the passive common noise canceller 60 in a partially exploded manner.

As shown in FIG. 1, the common mode filter circuit 10 of the present embodiment is connected between an inverter 30 and a three-phase AC motor 40. The inverter 30 includes a pair of input terminals 30a, 30b connected to a power supply 20, and three output terminals 30u, 30v, 30w that output three-phase AC. Three-phase AC is supplied to the three-phase AC motor 40 from the output terminals 30u, 30v, 30w of the inverter 30 via a motor cable 50.

The power supply 20 is a DC power supply such as a battery and a converter. The inverter 30 is, for example, a voltage source PWM inverter. The inverter 30 converts a DC voltage supplied from the power supply 20 via the input terminals 30a, 30b into a three-phase AC voltage by a switching operation of a power semiconductor element (IGBT, SiC, etc.), and outputs the three-phase AC voltage from the output terminals 30u, 30v, 30w. The AC voltage converted by the inverter 30 is supplied to the three-phase AC motor 40 via the common mode filter circuit 10 and the motor cable 50. A frame of the three-phase AC motor 40 is connected to an installation voltage via a grounding wire.

The common mode filter circuit 10 includes the passive common noise canceller 60. The passive common noise canceller 60 includes three common mode transformers 61, 62, 63 that cancel a common mode voltage of the three-phase AC. Also, the common mode filter circuit 10 includes three pairs of capacitors 71, 72, 73, 74, 75, 76. The three pairs of capacitors 71, 72, 73, 74, 75, 76 are connected to the common mode transformers 61, 62, 63 and the input terminals 30a, 30b of the inverter 30, respectively.

The common mode transformer 61 includes a one-phase primary winding 61t and three-phase secondary windings 61u, 61v, 61w. The common mode transformer 62 includes a one-phase primary winding 62t and three-phase secondary windings 62u, 62v, 62w. The common mode transformer 63 includes a one-phase primary winding 63t and three-phase secondary windings 63u, 63v, 63w.

One ends 61a, 62a, 63a of the respective primary windings 61t, 62t, 63t of the three common mode transformers 61, 62, 63 are connected to the three output terminals 30u, 30v, 30w of the inverter 30, respectively. That is, the one end 61a of the primary winding 61t of the common mode transformer 61 is connected to the three-phase U-phase output terminal 30u of the inverter 30. The one end 62a of the primary winding 62t of the common mode transformer 62 is connected to the three-phase V-phase output terminal 30v of the inverter 30. The one end 63a of the primary winding 63t of the common mode transformer 63 is connected to the three-phase W-phase output terminal 30w of the inverter 30.

Other ends 61b, 62b, 63b of the respective primary windings 61t, 62t, 63t of the three common mode transformers 61, 62, 63 are connected to other ends 71b, 73b, 75b of the capacitors 71, 73, 75. The capacitor 71 is one of a pair of capacitors 71, 72 among the three pairs of capacitors 71, 72, 73, 74, 75, 76. The capacitor 73 is one of a pair of capacitors 73, 74 among the three pairs of capacitors 71, 72, 73, 74, 75, 76. The capacitor 75 is one of a pair of capacitors 75, 76 among the three pairs of capacitors 71, 72, 73, 74, 75, 76. One ends 71a, 73a, 75a of the capacitors 71, 73, 75 are connected to the input terminal 30b which is one of the pair of input terminals 30a, 30b of the inverter 30.

The other ends 61b, 62b, 63b of the respective primary windings 61t, 62t, 63t of the three common mode transformers 61, 62, 63 are connected to other ends 72b, 74b, 76b of the capacitors 72, 74, 76. The capacitor 72 is the other of the pair of capacitors 71, 72 among the three pairs of capacitors 71, 72, 73, 74, 75, 76. The capacitor 74 is the other of the pair of capacitors 73, 74 among the three pairs of capacitors 71, 72, 73, 74, 75, 76. The capacitor 76 is the other of the pair of capacitors 75, 76 among the three pairs of capacitors 71, 72, 73, 74, 75, 76. One ends 72a, 74a, 76a of the capacitors 72, 74, 76 are connected to the input terminal 30a which is the other of the pair of input terminals 30a, 30b of the inverter 30.

That is, the other end 61b of the primary winding 61t of the common mode transformer 61 connected to the U-phase of the inverter 30 is connected to the other end 71b of the capacitor 71 and the other end 72b of the capacitor 72. The one end 71a of the capacitor 71 is connected to the one input terminal 30b of the inverter 30. The one end 72a of the capacitor 72 is connected to the other input terminal 30a of the inverter 30.

The other end 62b of the primary winding 62t of the common mode transformer 62 connected to the V-phase of the inverter 30 is connected to the other end 73b of the capacitor 73 and the other end 74b of the capacitor 74. The one end 73a of the capacitor 73 is connected to the one input terminal 30b of the inverter 30. The one end 74a of the capacitor 74 is connected to the other input terminal 30a of the inverter 30.

The other end 63b of the primary winding 63t of the common mode transformer 63 connected to the W-phase of the inverter 30 is connected to the other end 75b of the capacitor 75 and the other end 76b of the capacitor 76. The one end 75a of the capacitor 75 is connected to the one input terminal 30b of the inverter 30. The one end 76a of the capacitor 76 is connected to the other input terminal 30a of the inverter 30. The primary windings 61t, 62t, 63t and the capacitors 71, 72, 73, 74, 75, 76 constitute a filter that detects common mode voltages of the U-phase, V-phase, and W-phase.

The three-phase secondary windings 61u, 61v, 61w, 62u, 62v, 62w, 63u, 63v, 63w of the three common mode transformers 61, 62, 63 are respectively connected in series with each other. One ends 64ua, 64va, 64wa of the respective three-phase secondary windings 61u, 61v, 61w, 62u, 62v, 62w, 63u, 63v, 63w of the three common mode transformers 61, 62, 63 connected in series with each other are connected to the three output terminals 30u, 30v, 30w of the inverter 30, respectively.

The other ends 64ub, 64vb, 64wb of the respective three-phase secondary windings 61u, 61v, 61w, 62u, 62v, 62w, 63u, 63v, 63w of the three common mode transformers 61, 62, 63 connected in series with each other are connected to respective phases of the three-phase AC motor 40 via the motor cable 50.

That is, the U-phase secondary windings 61u, 62u, 63u of the common mode transformers 61, 62, 63 are connected in series with each other. The one end 64ua of the secondary windings 61u, 62u, 63u is connected to the U-phase output terminal 30u of the inverter 30. The other end 64ub of the secondary windings 61u, 62u, 63u is connected to the U-phase of the three-phase AC motor 40.

The V-phase secondary windings 61v, 62v, 63v of the common mode transformers 61, 62, 63 are connected in series with each other. The one end 64va of the secondary windings 61v, 62v, 63v is connected to the V-phase output terminal 30v of the inverter 30. The other end 64vb of the secondary windings 61v, 62v, 63v is connected to the V-phase of the three-phase AC motor 40.

The W-phase secondary windings 61w, 62w, 63w of the common mode transformers 61, 62, 63 are connected in series with each other. The one end 64wa of the secondary windings 61w, 62w, 63w is connected to the W-phase output terminal 30w of the inverter 30. The other end 64wb of the secondary windings 61w, 62w, 63w is connected to the W-phase of the three-phase AC motor 40.

A ratio of the number of turns of the respective primary windings 61t, 62t, 63t of the three common mode transformers 61, 62, 63 to the number of turns of the secondary windings 61u, 61v, 61w, 62u, 62v, 62w, 63u, 63v, 63w is 3:1. In the present embodiment, the number of turns of the respective primary windings 61t, 62t, 63t of the three common mode transformers 61, 62, 63 is 3, and the number of turns of the respective secondary windings 61u, 61v, 61w, 62u, 62v, 62w, 63u, 63v, 63w of the three common mode transformers 61, 62, 63 is 1 (only passing through the inside of a core 65 described later).

Next, the passive common noise canceller 60 will be further described with reference to FIGS. 2 and 3. As described above, the passive common noise canceller 60 includes the three common mode transformers 61, 62, 63. These three common mode transformers 61, 62, 63 have configurations similar to each other. Therefore, the common mode transformer 61 is shown as a representative in FIG. 3, and the configuration of the common mode transformer 61 will be described below as a representative, and overlapping descriptions of the common mode transformers 62, 63 may be omitted.

As shown in FIGS. 2 and 3, the common mode transformer 61 has an annular common mode transformer core 65 (hereinafter simply referred to as "core 65") made of a magnetic material. The core 65 is, for example, an iron core. The primary winding 61t of the common mode transformer 61 is wound three times by passing through an inside 65i and an outside 65o of the annular core 65.

The secondary windings 61u, 61v, 61w of the common mode transformer 61 are each wound once by passing through the inside 65i of the core 65 of the common mode transformer 61 only once. Thus, a common mode transformer having a structure in which the secondary winding passes through the inside of the core only once may be generally referred to as a "through-type common mode transformer" or the like.

The primary winding 61t is an electric wire, which is a conductive wire made of a metal with high electrical conductivity such as copper or aluminum covered with an insulating coating. The secondary windings 61u, 61v, 61w are electric wires or busbars made of a material with high electrical conductivity such as copper or aluminum.

Further, the common mode transformer 61 includes two heat sinks 81, 81 joined to the core 65. The heat sinks 81, 81 function as coolers for cooling the core 65. Details of the heat sinks 81, 81 will be described later.

In this common mode filter circuit 10 (FIG. 1), a U-phase secondary winding 69u, a V-phase secondary winding 69v, and a W-phase secondary winding 69w pass through the insides 65i of the three cores 65 of the common mode transformers 61, 62, 63 in order, respectively. The three cores 65 of the common mode transformers 61, 62, 63 are arranged in a straight line, and the secondary windings 69u, 69v, 69w extend linearly penetrating the three cores 65.

Of the secondary winding 69u, a portion passing through the common mode transformer 61 is the secondary winding 61u (FIG. 1), a portion passing through the common mode transformer 62 is the secondary winding 62u (FIG. 1), and a portion passing through the common mode transformer 63 is the secondary winding 63u (FIG. 1).

Similarly, of the secondary winding 69v, a portion passing through the common mode transformer 61 is the secondary winding 61v (FIG. 1), a portion passing through the common mode transformer 62 is the secondary winding 62v (FIG. 1), and a portion passing through the common mode transformer 63 is the secondary winding 63v (FIG. 1).

Similarly, of the secondary winding 69w, a portion passing through the common mode transformer 61 is the secondary winding 61w (FIG. 1), a portion passing through the common mode transformer 62 is the secondary winding 62w (FIG. 1), and a portion passing through the common mode transformer 63 is the secondary winding 63w (FIG. 1).

According to the common mode filter circuit 10 as described above, the common mode voltage that can cause bearing failure of the three-phase AC motor 40 is reduced.

Here, in the common mode transformers 61, 62, 63 as described above, the temperature of the core 65 rises due to iron loss. If the core 65 becomes too high in temperature, continuation of operation may become impossible. Therefore, the common mode transformers 61, 62, 63 have a configuration for appropriately cooling the core 65. Next, a specific configuration for appropriately cooling the core 65 in the passive common noise canceller 60 will be described.

The secondary windings 69u, 69v, 69w in the present embodiment extend linearly within a range where the passive common noise canceller 60 is constructed. Further, as shown in FIGS. 2 and 3, the core 65 in the present embodiment has a cylindrical shape, and a cylindrical axis of the core 65 extends in an extending direction of the secondary windings 69u, 69v, 69w. In the following description, the term "axial direction" simply means the cylindrical axis direction of the core 65 (the extending direction of the secondary windings 69u, 69v, 69w).

The common mode transformer 61 includes two heat sinks 81, 81 joined to the core 65 in order to cool the core 65. The two heat sinks 81, 81 are arranged so as to sandwich the core 65 therebetween in the axial direction. The heat sink 81 in the present embodiment has a cylindrical shape having substantially the same inner diameter and outer diameter as the core 65. The heat sink 81 is joined to the core 65 so as to abut cylindrical end surfaces against each other. That is, the heat sink 81 and the core 65 are joined such that a cylindrical end surface 81a of the heat sink 81 and a cylindrical end surface 65a of the core 65 are in close contact. The heat sink 81 is made of a material with high thermal conductivity such as copper or aluminum, and performs heat exchange with the joined core 65. The secondary windings 69u, 69v, 69w pass through hollow portions of the heat sinks 81, 81 and the inside 65i of the core 65.

A joining method of the heat sink 81 and the core 65 may be, for example, adhesion using an adhesive. Further, a heat conduction portion (not shown) made of a thermally conductive material (TIM: Thermal Interface Material) may be interposed between the heat sink 81 and the core 65.

In such a common mode transformer 61, the primary winding 61t is wound three times around the core 65 so as to alternately pass through the inside 65i and the outside 65o of the core 65. Therefore, the primary winding 61t may interfere with a joint portion between the heat sink 81 and the core 65 between the inside 65i and the outside 65o of the core 65. Therefore, a passage path allowing the primary winding 61t to pass between the inside 65i and the outside 65o of the core 65 is formed in order to install the primary winding 61t without interfering with the heat sink 81 and the core 65.

As a specific example of the above passage path, a recessed portion formed by recessing a part of the cylindrical end surface 81a of the heat sink 81 in a circumferential direction may be formed. In this case, a hole of a size corresponding to the depth and width of the recessed portion is created between the core 65 and the heat sink 81, constituting the passage path as described above.

As a more specific example of the recessed portion, in the present embodiment, as shown in FIGS. 2 and 3, a cutout portion 83 cut out in a part in the circumferential direction is formed in the cylindrical end surface 81a of the heat sink 81. The cutout portion 83 is dug down to a predetermined depth from the cylindrical end surface 81a and formed with a predetermined length in the circumferential direction so as to have a cross-sectional shape allowing the primary winding 61t to pass through three times. Such a cutout portion 83 forms a gap between the joined heat sink 81 and core 65, allowing the primary winding 61t connecting from the inside 65i to the outside 65o of the core 65 to pass through the cutout portion 83.

The heat sinks 81 as described above are respectively joined to both cylindrical end surfaces 65a of the core 65 of the common mode transformer 61. That is, the common mode transformer 61 includes the core 65 and the two heat sinks 81, 81 arranged with the core 65 sandwiched therebetween. Each heat sink 81 is joined to the core 65 so as to abut end surfaces against each other. The cutout portion 83 is formed in the heat sink 81, and the cutout portion 83 functions as a passage path allowing the primary winding 61t to pass between the inside 65i and the outside 65o of the core 65. The passive common noise canceller 60 includes the three common mode transformers 61, 62, 63 having the above configuration, and the three common mode transformers 61, 62, 63 are arranged in the axial direction.

Note that FIGS. 2 and 3 schematically represent parts necessary for explaining the structure of the common mode transformer 61 of the present embodiment in an exaggerated manner, and do not show the exact shape or dimensions of each part. For example, although the heat sinks 81 are schematically illustrated as a relatively simple cylindrical shape in FIGS. 2 and 3, the actual heat sinks 81 may have, for example, a large number of thin plate-like parallel fins. A heat sink having such a large number of fins may be generally referred to as a "comb-shaped heat sink". Further, for example, the heat sinks 81 may be hollow members having a hollow portion through which a refrigerant (for example, cooling air or cooling water) passes.

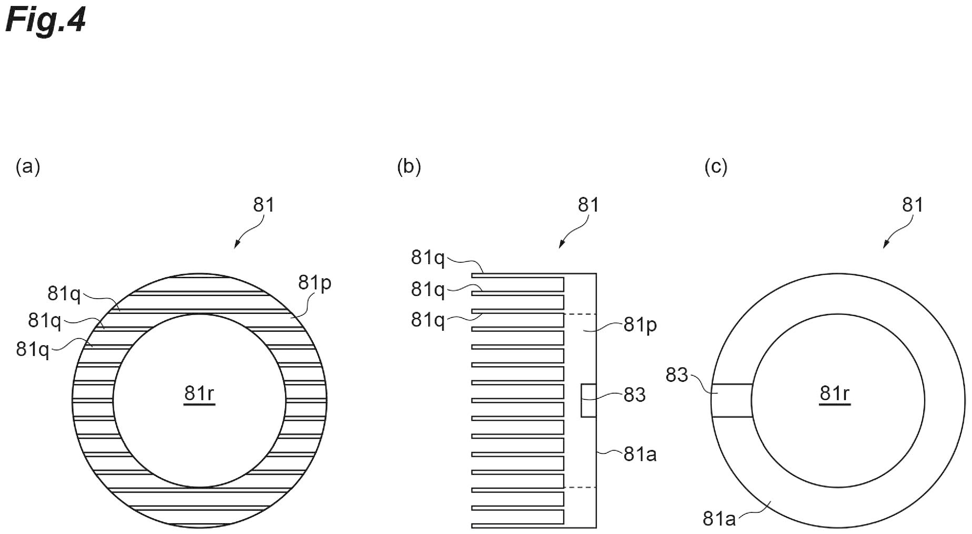

A specific example where the heat sink 81 is comb-shaped is shown in FIG. 4. FIG. 4(a) is a left side view of the comb-shaped heat sink 81, FIG. 4(b) is a front view thereof, and FIG. 4(c) is a right side view thereof. This heat sink 81 is an integrally formed metal block, and has a base portion 81p forming an annular flat plate, and a large number of fins 80q extending perpendicularly from one surface of the base portion 81p. The other surface of the base portion 81p constitutes the cylindrical end surface 81a, and the cutout portion 83 is formed in the cylindrical end surface 81a. The depth of the cutout portion 83 is smaller than the thickness of the base portion 81p. A through hole 81r for allowing the secondary windings 69u, 69v, 69w to pass is formed in the center of the heat sink 81.

Subsequently, functions and effects of the passive common noise canceller 60 of the present embodiment as described above will be described. In the common mode transformers 61, 62, 63, the heat sinks 81, 81 joined to the core 65 perform heat exchange with the core 65. That is, the heat of the core 65 that has become high temperature is transferred to the heat sinks 81, 81. Then, the core 65 is cooled by dissipating the heat transferred from the core 65 to the outside from the heat sinks 81, 81. A method of heat dissipation from the heat sinks 81, 81 to the outside, that is, a method of cooling the heat sinks 81, 81, may be a natural air cooling method, a forced air cooling method, or a water cooling method. That is, a cooling unit that cools the heat sinks 81, 81 by each method as described above may be appropriately provided in an apparatus in which the common mode filter circuit 10 is constructed. Then, specifications of the heat sink 81 may be designed according to specifications of the cooling unit. That is, for example, when the cooling unit is a blower and the heat sink 81 is comb-shaped, the heat sink 81 may be designed such that the direction of the fins of the heat sink 81 is parallel to a flow direction of cooling air by the cooling unit.

Thus, according to the passive common noise canceller 60, the core 65 can be appropriately cooled. Then, by appropriately designing the cooling capacity of the heat sinks 81, 81, it is possible to prevent the temperature of the core 65 from reaching an allowable upper limit for continuous operation, enabling continuous operation of the common mode filter circuit 10 and the three-phase AC motor 40.

Note that, for example, in a case where there is a difference in the tendency of temperature rise of the core 65 during operation for each of the three common mode transformers 61, 62, 63, heat sinks 81 with different specifications may be applied for each of the common mode transformers 61, 62, 63. That is, the cooling capacity of each heat sink 81 included in the passive common noise canceller 60 does not necessarily have to be all the same, and heat sinks 81 with different cooling capacities may be respectively applied corresponding to the temperature rise tendency of each core 65.

For example, in the passive common noise canceller 60, it is considered that the closer to the central position in the arrangement direction of the common mode transformers 61, 62, 63, the more likely heat is to be trapped, and the stronger the tendency of temperature rise. Therefore, among the respective heat sinks 81 included in the passive common noise canceller 60, a heat sink 81 (first cooler) located closer to the center may be made to have a higher cooling capacity than another heat sink 81 (second cooler) located farther from the center. Thereby, the common mode transformer close to the central position can be cooled by the heat sink with high cooling capacity.

For example, the cooling capacity of the heat sink may be made lower as the distance from the most central arrangement increases. More specifically, as shown in FIG. 2, since the common mode transformer 62 arranged in the center among the three is located between the common mode transformers 61, 63, it is considered that heat is likely to be trapped and difficult to dissipate. Therefore, in the common mode transformer 62, it is considered that the temperature of the core 65 tends to rise easily compared to the common mode transformers 61, 63. Therefore, heat sinks 81S, 81S having a higher cooling capacity than other heat sinks 81 may be used for the common mode transformer 62. Further, comparing the two heat sinks 81 of the common mode transformer 61, a heat sink 81T having a higher cooling capacity than the other may be used for one on the side closer to the common mode transformer 62. Similarly, comparing the two heat sinks 81 of the common mode transformer 63, a heat sink 81T having a higher cooling capacity than the other may be used for one on the side closer to the common mode transformer 62. In this case, the cooling capacity of the heat sink 81S is higher than that of the heat sink 81T. Note that in order to adjust the cooling capacity of the heat sink 81S, for example, the size of the heat sinks 81S, the number or surface area of fins, or the material of the heat sinks 81 may be appropriately adjusted.

Further, in order to efficiently cool the core 65 as described above, it is necessary to bring the core 65 and the heat sinks 81, 81 into good close contact. On the other hand, according to the passive common noise canceller 60 of the present embodiment, by passing the primary winding 61t through the cutout portion 83 of the heat sink 81, adhesion between the cylindrical end surface 81a of the heat sink 81 and the cylindrical end surface 65a of the core 65 can be enhanced. That is, the primary winding 61t does not interfere with the heat sink 81, and the entire cylindrical end surface 81a excluding the cutout portion 83 comes into good close contact with the cylindrical end surface 65a of the core 65. Therefore, the core 65 can be appropriately cooled.

The present disclosure can be implemented in various forms with various changes and improvements based on the knowledge of those skilled in the art, including the above-described embodiments. Further, for example, the following modifications can be configured using the technical matters described in the above-described embodiments. Configurations of the respective embodiments and the like may be used in appropriate combination.

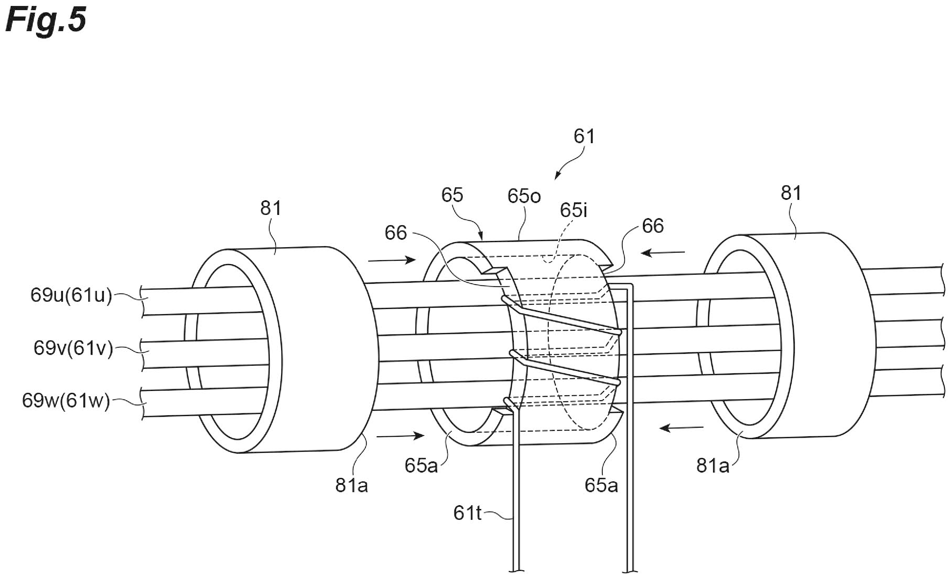

For example, instead of providing the cutout portion 83 in the heat sink 81, a cutout portion 66 may be provided in the cylindrical end surface 65a of the core 65 as shown in FIG. 5. The shape of the cutout portion 66 may be similar to the cutout portion 83 described above. Note that in the case of the configuration of FIG. 3 in which the cutout portion 83 is provided in the heat sink 81, it is possible to suppress a change in electromagnetic performance accompanying a change in the shape of the core 65.

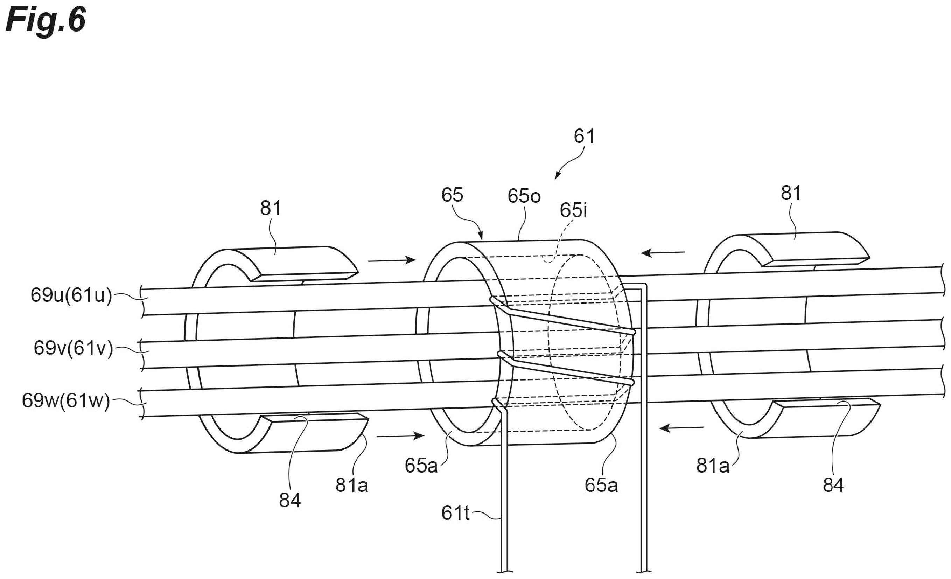

Further, in the embodiment, the cutout portion 83 dug down to a predetermined depth from the cylindrical end surface 81a of the heat sink 81 is formed as the passage path allowing the primary winding 61t to pass, but the passage path is not limited to such a cutout portion 83. For example, as shown in FIG. 6, a cutout portion 84 in which a part of the heat sink 81 in the circumferential direction is cut out over the entire width in the axial direction may be formed as the passage path. In this case, the heat sink 81 has a C-shape when viewed from the axial direction.

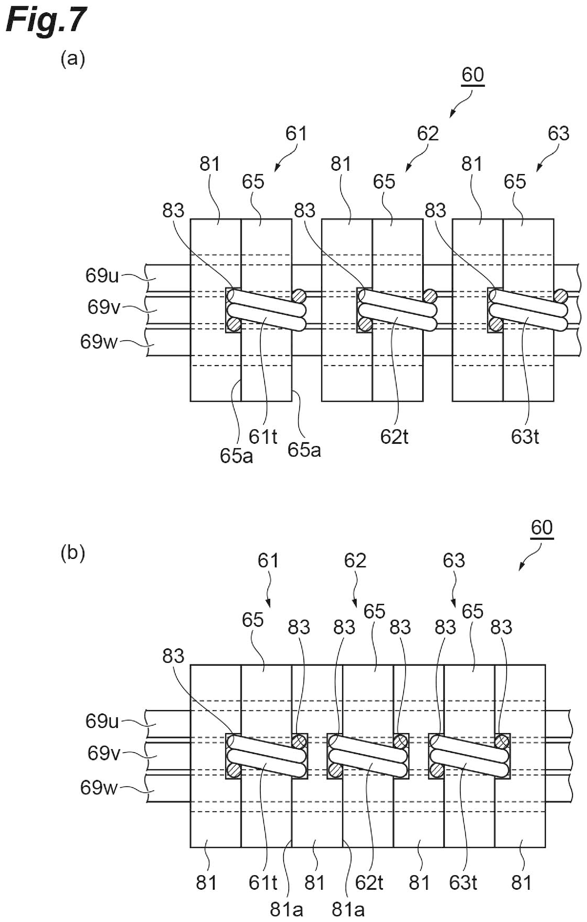

Further, it is not essential that the heat sinks 81, 81 are joined to both sides of the core 65, and for example, as shown in FIG. 7(a), the heat sink 81 may be joined only to one cylindrical end surface 65a of each core 65 in each common mode transformer 61, 62, 63.

Further, for example, as shown in FIG. 7(b), the heat sinks 81 between the cores 65 adjacent to each other may be integrally shared. In this case, the adjacent cores 65 are joined to both sides of one common heat sink 81. Then, the three cores 65 and the four heat sinks 81 are alternately arranged in the axial direction in a state where end surfaces thereof are abutted against each other and joined. In this case, in the heat sinks 81 sandwiched between the cores 65, the cutout portions 83 are respectively formed in both cylindrical end surfaces 81a. According to this configuration, the common mode transformers 61, 62, 63 can be brought closer in the axial direction, and the passive common noise canceller 60 can be made compact as a whole. Further, the number of parts can be reduced by such sharing of the heat sinks 81.

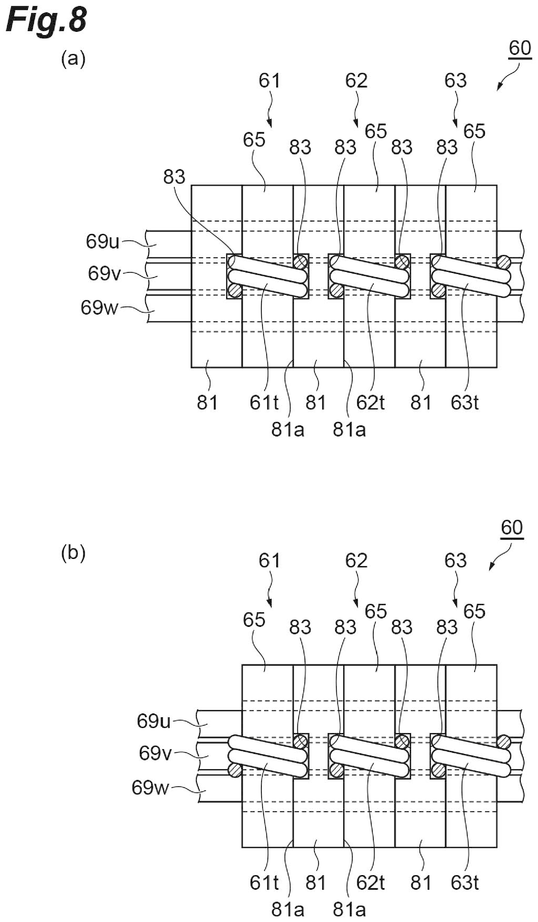

Further, in the configuration in which the cores 65 and the heat sinks 81 are alternately arranged as described above, the heat sink 81 at one end of the arrangement may be omitted, and for example, a configuration as shown in FIG. 8(a) may be adopted. In this case, the three cores 65 and the three heat sinks 81 are alternately arranged. Also, the heat sinks 81 at both ends of the arrangement may be omitted, and for example, a configuration as shown in FIG. 8(b) may be adopted. In this case, the three cores 65 and the two heat sinks 81 are alternately arranged.

Further, the shape of the core 65 or the heat sink 81 is not limited to a cylindrical shape as long as it is an annular shape allowing the secondary windings 69u, 69v, 69w to be inserted. For example, the shape of the core 65 or the heat sink 81 may be an annular shape forming an ellipse or an annular shape forming a rectangle when viewed from the extending direction of the secondary windings 69u, 69v, 69w.

The secondary windings 69u, 69v, 69w may be electric wires or busbars as described above. There is no restriction on how to arrange the three secondary windings 69u, 69v, 69w, as long as they are inserted inside the core 65 or the heat sink 81. Further, the secondary windings 69u, 69v, 69w may extend linearly or may be bent.

When the secondary windings 69u, 69v, 69w are busbars, an insulator may be provided on an inner wall surface of the heat sinks 81 so that the heat sinks 81 and the secondary windings 69u, 69v, 69w do not conduct electricity. Further, the core 65 and the heat sink 81 are not limited to integrally formed members, and may be composed of a plurality of parts divided in a circumferential direction.

Although the heat sinks 81 in the above-described embodiment have a cylindrical shape having substantially the same inner diameter and outer diameter as the core 65, the shape of the heat sinks 81 is not limited to the above as long as it can exchange heat with the core 65 by abutting end portions thereof in the axial direction against each other. For example, the heat sinks 81 may protrude to the outside of the core 65 when viewed from the axial direction.

### Reference Signs List

10 ... Common mode filter circuit
60 ... Passive common noise canceller
61, 62, 63 ... Common mode transformer
61t, 62t, 63t ... Primary winding
69u, 69v, 69w ... Secondary winding
65 ... Core (Common mode transformer core)
65a ... Cylindrical end surface
65i ... Inside
65o ... Outside
81 ... Heat sink (Cooler)
81a ... Cylindrical end surface
66, 83, 84 ... Cutout portion (Passage path)

## Claims

1. A common mode filter circuit comprising:
an annular common mode transformer core through which a secondary winding is inserted inside;
a primary winding wound around the common mode transformer core so as to pass through an inside and an outside of the common mode transformer core; and
a cooler through which the secondary winding is inserted inside, the cooler being joined to the common mode transformer core by abutting end portions thereof against each other in an extending direction of the secondary winding, and performing heat exchange with the common mode transformer core,
wherein a passage path allowing the primary winding to pass between the inside and the outside of the common mode transformer core is formed in the cooler or the common mode transformer core.

2. The common mode filter circuit according to claim 1, wherein the passage path is formed in the cooler.

3. The common mode filter circuit according to claim 1, wherein the passage path is a cutout portion formed at an end portion of the cooler or the common mode transformer core.

4. The common mode filter circuit according to claim 1, wherein a plurality of the common mode transformer cores and a plurality of the coolers are alternately arranged in the extending direction of the secondary winding with end portions thereof abutting against each other.

5. The common mode filter circuit according to claim 1,
wherein a plurality of the common mode transformer cores and a plurality of the coolers are arranged in the extending direction of the secondary winding, and
wherein the plurality of the coolers includes one having a cooling capacity different from others.

6. The common mode filter circuit according to claim 5, wherein the plurality of the coolers includes a first cooler located at a position closer to a center, and a second cooler located at a position farther from the center than the first cooler and having a lower cooling capacity than the first cooler.

7. The common mode filter circuit according to claim 5, wherein among the plurality of the coolers, one located closer to a center has a higher cooling capacity.
